(19) Europäisches Patentamt / European Patent Office / Office européen des brevets

(11) **EP 4 393 992 A1**

(12) **EUROPEAN PATENT APPLICATION**
published in accordance with Art. 153(4) EPC

(43) Date of publication:
**03.07.2024 Bulletin 2024/27**

(21) Application number: **22861073.9**

(22) Date of filing: **01.08.2022**

(51) International Patent Classification (IPC):
$C08L\ 9/00$ (2006.01)   $C08K\ 3/06$ (2006.01)
$C08K\ 5/38$ (2006.01)   $C08L\ 51/04$ (2006.01)
$C08L\ 53/02$ (2006.01)

(52) Cooperative Patent Classification (CPC):
**C08K 3/06; C08K 5/38; C08L 9/00; C08L 51/04; C08L 53/02**

(86) International application number:
**PCT/JP2022/029529**

(87) International publication number:
**WO 2023/026782 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **26.08.2021 JP 2021138148**

(71) Applicant: **Zeon Corporation**
**Tokyo 100-8246 (JP)**

(72) Inventor: **KODEMURA, Junji**
**Tokyo 100-8246 (JP)**

(74) Representative: **Kraus & Lederer PartGmbB**
**Thomas-Wimmer-Ring 15**
**80539 München (DE)**

(54) **LATEX COMPOSITION AND DIP-MOLDED BODY**

(57)    Provided is a latex composition which has high stability and can afford dip-molded articles having low tensile elastic modulus and excellent flexibility. Provided is a latex composition containing an ion-polymerized conjugated diene polymer (A) latex and an emulsion-polymerized conjugated diene polymer (B) latex.

**Description**

TECHNICAL FIELD

The present invention relates to a latex composition which has high stability and can afford dip-molded articles having low tensile elastic modulus and excellent flexibility.

BACKGROUND ART

Conventionally, it is known that dip-molded articles (such as teats, balloons, gloves, balloons, and stalls) used in contact with the human body can be prepared by dip molding a latex composition containing natural rubber latex. However, in some cases, such dip-molded articles are not suitable for use in direct contact with the mucosa or organs of a living body because the natural rubber latex contains proteins that may cause immediate (Type I) allergic reactions in the human body. In response to this problem, use of synthetic rubber latex instead of the natural rubber latex has been examined.

For example, Patent Document 1 discloses a carboxyl-modified synthetic isoprene polymer latex for dip molding obtained by graft polymerizing a monomer comprising a carboxyl group onto a synthetic isoprene polymer in an aqueous phase, wherein the carboxyl-modified synthetic isoprene polymer latex comprises at least one anionic surfactant, and a carboxyl-modified synthetic isoprene polymer composing the carboxyl-modified synthetic isoprene latex has a tetrahydrofuran-insoluble content of 30 wt% or more.

RELATED ART DOCUMENT

PATENT DOCUMENT

Patent Document 1: WO 2014/129547

SUMMARY OF THE INVENTION

PROBLEMS TO BE SOLVED BY THE INVENTION

In dip-molded articles such as gloves, there is an increasing requirement for flexibility, and thus a latex composition which can afford dip-molded articles having low tensile elastic modulus and excellent flexibility is required. The latex for dip molding according to Patent document 1 can afford a dip-molded article having excellent tensile strength, but has a room for improvement in flexibility. In addition, since the latex composition is sometimes stored or subjected to maturation before dip molding, the latex composition also requires stability (i.e., the formation of aggregates is suppressed during storage or maturation).

The present invention has been made in consideration of such circumstances. An object of the present invention is to provide a latex composition which has high stability and can afford dip-molded articles having low tensile elastic modulus and excellent flexibility.

MEANS FOR SOLVING PROBLEMS

The present inventors, who have conducted extensive research to solve above problems, have found that the problems can be solved by a latex composition comprising an ion-polymerized conjugated diene polymer (A) latex and an emulsion-polymerized conjugated diene polymer (B) latex. This knowledge has led to completion of the present invention.

Specifically, the present invention provides a latex composition comprising an ion-polymerized conjugated diene polymer (A) latex, and an emulsion-polymerized conjugated diene polymer (B) latex.

In the latex composition according to the present invention, the content of the emulsion-polymerized conjugated diene polymer (B) is preferably 0.1 to 3 parts by weight relative to 100 parts by weight of the ion-polymerized conjugated diene polymer (A).

In the latex composition according to the present invention, the emulsion-polymerized conjugated diene polymer (B) preferably contains 95.0 to 99.9 wt% of conjugated diene monomer units and 0.1 to 5.0 wt% of ethylenically unsaturated carboxylic acid monomer units.

In the latex composition according to the present invention, the ion-polymerized conjugated diene polymer (A) is preferably polyisoprene or a styrene-isoprene-styrene block copolymer.

In the latex composition according to the present invention, the ion-polymerized conjugated diene polymer (A) is preferably a carboxylic acid-modified product obtained by proceeding a carboxylic acid-modification in an aqueous phase.

In the latex composition according to the present invention, the content of cis bond units in the conjugated diene monomer units contained in the ion-polymerized conjugated diene polymer (A) is preferably more than 70 wt% relative to the total conjugated diene monomer units.

In the latex composition according to the present invention, the content of cis bond units in the conjugated diene monomer units contained in the emulsion-polymerized conjugated diene polymer (B) is preferably 10 to 70 wt% relative to the total conjugated diene monomer units.

The latex composition according to the present invention preferably further contains a sulfur-based vulcanizing agent.

The latex composition according to the present invention preferably further contains a vulcanization accelerator.

In the latex composition according to the present invention, the vulcanization accelerator is preferably a xanthogen compound.

In addition, the present invention also provides a dip-molded article obtained by dip molding of the above-described latex composition.

EFFECTS OF THE INVENTION

The present invention can provide a latex composition which has high stability and can afford dip-molded articles having low tensile elastic modulus and excellent flexibility.

EMBODIMENTS FOR CARRYING OUT THE INVENTION

<Latex composition>

The latex composition according to the present invention comprises an ion-polymerized conjugated diene polymer (A) latex, and an emulsion-polymerized conjugated diene polymer (B) latex.

<Ion-polymerized conjugated diene polymer (A) latex>

The ion-polymerized conjugated diene polymer (A) latex used in the present invention is a latex containing an ion-polymerized conjugated diene polymer (A) obtained by ionic polymerization of a monomer mixture containing conjugated diene monomers, and water.

The above-mentioned ionic polymerization may be anionic polymerization, or may be cationic polymerization, and is preferably, but not particularly limited to, anionic polymerization. Specifically, the ion-polymerized conjugated diene polymer (A) constituting the ion-polymerized conjugated diene polymer (A) latex may be an anion-polymerized conjugated diene polymer, or may be a cation-polymerized conjugated diene polymer, and is preferably, but not limited to, an anion-polymerized conjugated diene polymer.

Examples of the ion-polymerized conjugated diene polymer (A) latex include, but are not particularly limited to, synthetic polyisoprene latices, styrene-isoprene-styrene block copolymer (SIS) latices, butadiene polymer latices, styrene-butadiene copolymer latices, and the like. Among these, latices of polymers having isoprene units, such as synthetic polyisoprene latices and SIS latices, are preferred, and synthetic polyisoprene latices are more preferred because a dip-molded article having further reduced tensile elastic modulus and further improved flexibility can be obtained.

The synthetic polyisoprene latex (hereinafter, sometimes referred to as "ion-polymerized polyisoprene latex") as the ion-polymerized conjugated diene polymer (A) latex is a latex containing the ion-polymerized polyisoprene (hereinafter, sometimes referred to as "ion-polymerized polyisoprene") obtained by ionic polymerization of a monomer mixture containing isoprene, and water.

The ion-polymerized polyisoprene may be an isoprene homopolymer, or may a copolymer of isoprene and a different ethylenically unsaturated monomer that can copolymerize with isoprene. The content of isoprene units in the ion-polymerized polyisoprene is preferably 70 wt% or more, more preferably 90 wt% or more, still more preferably 95 wt% or more, particularly preferably 100 wt% (i.e., isoprene homopolymer) relative to the total monomer units because a dip-molded article having further reduced tensile elastic modulus and further improved flexibility can be obtained.

Examples of the different ethylenically unsaturated monomer that can copolymerize with isoprene include conjugated diene monomers other than isoprene, such as butadiene, chloroprene, and 1,3-pentadiene; ethylenically unsaturated carboxylic acid monomers that are ethylenically unsaturated monomers each containing a carboxyl group; vinyl aromatic monomers such as styrene, alkyl styrenes, and vinylnaphthalene; ethylenically unsaturated carboxylic acid ester monomers such as methyl (meth)acrylate, ethyl (meth)acrylate, butyl (meth)acrylate, 2-ethylhexyl (meth)acrylate, trifluoroethyl (meth)acrylate, tetrafluoropropyl (meth)acrylate, dibutyl maleate, dibutyl fumarate, diethyl maleate, methoxymethyl (meth)acrylate, ethoxyethyl (meth)acrylate, methoxyethoxyethyl (meth)acrylate, cyanomethyl (meth)acrylate, 2-cyanoethyl (meth)acrylate, 1-cyanopropyl (meth)acrylate, 2-ethyl-6-cyanohexyl (meth)acrylate, 3-cyanopropyl (meth)acrylate, hydroxyethyl (meth)acrylate, hydroxypropyl (meth)acrylate, glycidyl (meth)acrylate, and dimethylaminoethyl (meth)acrylate; ethylenically unsaturated nitrile monomers such as acrylonitrile, methacrylonitrile, fumaronitrile, and $\alpha$-chloroacrylonitrile; fluoroalkyl vinyl ethers such as fluoroethyl vinyl ether; ethylenically unsaturated amide monomers such as (meth)acrylamide, N-methylol (meth)acrylamide, N,N-dimethylol (meth)acrylamide, N-methoxymethyl (meth)acrylamide, and N-propoxymethyl (meth)acrylamide; cross-linkable monomers such as divinylbenzene, polyethylene glycol di(meth)acrylate, polypropylene glycol di(meth)acrylate, trimethylolpropane tri(meth)acrylate, and pentaerythritol (meth)acrylate; and the like. These different ethylenically unsaturated monomers that can copolymerize with isoprene may be used alone or in combination. The content of the different ethylenically unsaturated monomers in the ion-polymerized polyisoprene is preferably 30 wt% or less, more preferably 10 wt% or less, still more preferably 5 wt% or less, particularly preferably 0 wt% (i.e., isoprene homopolymer) relative to the total monomer units because a dip-molded article having further reduced tensile elastic modulus and further improved flexibility can be obtained.

As ethylenically unsaturated carboxylic acid monomers, any ethylenically unsaturated carboxylic acid monomer can be selected without limitation as long as it contains a carboxyl group. Examples thereof include ethylenically unsaturated monocarboxylic acid monomers such as acrylic acid and methacrylic acid; ethylenically unsaturated polyvalent carboxylic acid monomers such as itaconic acid, maleic acid, and fumaric acid; ethylenically unsaturated polyvalent carboxylic anhydrides such as maleic anhydride and citraconic anhydride; ethylenically unsaturated polyvalent carboxylic acid partial ester monomers such as monobutyl fumarate, monobutyl maleate, and mono-2-hydroxypropyl maleate; and the like. These ethylenically unsaturated carboxylic acid monomers can also be used as alkali metal salts or ammonium salts. These ethylenically unsaturated carboxylic acid monomers can be used alone or in combination.

The ion-polymerized polyisoprene can be prepared by ionic polymerization of isoprene optionally with a different ethylenically unsaturated monomer that can copolymerize in an inert polymerization solvent using an ionic polymerization catalyst. After polymerization, impurities including residual polymerization catalyst in the polymer solution may be removed. Furthermore, an antioxidant as described later may be added to the solution during or after polymerization. Although the thus obtained polymer solution of ion-polymerized polyisoprene may be used as is to produce the ion-polymerized polyisoprene latex, solid ion-polymerized polyisoprene can be isolated from the polymer solution, dissolved in an organic solvent, and used to produce the ion-polymerized polyisoprene latex.

The ionic polymerization catalyst used in the above-described ionic polymerization may be an anionic polymerization catalyst, or may be a cationic polymerization catalyst, and is preferably, but not particularly limited to, an anionic polymerization catalyst, more preferably a Ziegler polymerization catalyst composed of trialkyl aluminum-titanium tetrachloride (a coordinated anionic polymerization catalyst), and an alkyl lithium polymerization catalyst (an anionic polymerization catalyst) such as n-butyllithium and sec-butyllithium, still more preferably Ziegler polymerization catalyst. That is, the ion-polymerized polyisoprene is not particularly limited as long as it is cationic polymerization polyisoprene or anionic polymerization polyisoprene, and is preferably anionic polymerization polyisoprene, more preferably coordinated anion-polymerized polyisoprene obtained by using Ziegler polymerization catalyst, or anionic polymerization polyisoprene obtained by using an alkyl lithium polymerization catalyst, still more preferably coordinated anion-polymerized polyisoprene obtained by using Ziegler polymerization catalyst.

The method for producing the ion-polymerized polyisoprene latex is preferably, but not particularly limited to, a method for producing an ion-polymerized polyisoprene latex, including performing the above-described ionic polymerization to obtain a solution or microsuspension of ion-polymerized polyisoprene, which is dissolved or finely dispersed in an organic solvent; emulsifying the resulting solution or microsuspension of ion-polymerized polyisoprene in water in the presence of an emulsifier; and removing the organic solvent as needed.

Examples of organic solvents include aromatic hydrocarbon solvents such as benzene, toluene, and xylene; alicyclic hydrocarbon solvents such as cyclopentane, cyclopentene, cyclohexane, and cyclohexene; aliphatic hydrocarbon solvents such as pentane, hexane, and heptane; halogenated hydrocarbon solvents such as methylene chloride, chloroform, and ethylene dichloride; and the like. Among these, preferred are alicyclic hydrocarbon solvents and aliphatic hydrocarbon solvents, more preferred are pentane, cyclohexane, and n-hexane, and particularly preferred is n-hexane.

The amount of the organic solvent used is preferably 2,000 parts by weight or less, more preferably 20 to 1,500 parts by weight, still more preferably 500 to 1,500 parts by weight relative to 100 parts by weight of the ion-polymerized polyisoprene.

Preferred emulsifiers are ionic emulsifiers. Among these, more preferred is use of anionic emulsifiers. Examples of anionic emulsifiers include fatty acid salts such as sodium laurate, potassium myristate, sodium palmitate, potassium oleate, sodium linolenate, sodium rosinate, and potassium rosinate; alkylbenzene sulfonates such as sodium dodecylbenzenesulfonate, potassium dodecylbenzenesulfonate, sodium decylbenzenesulfonate, potassium decylbenzenesulfonate, sodium cetylbenzenesulfonate, and potassium cetylbenzenesulfonate; alkyl sulfosuccinates such as sodium di(2-ethylhexyl) sulfosuccinate, potassium di(2-ethylhexyl) sulfosuccinate, and sodium dioctylsulfosuccinate; alkyl sulfate ester salts such as sodium lauryl sulfate and potassium lauryl sulfate; polyoxyethylene alkyl ether sulfate ester salts such as sodium polyoxyethylene lauryl ether sulfate and potassium polyoxyethylene lauryl ether sulfate; monoalkyl phosphate salts such as sodium lauryl phosphate and potassium lauryl phosphate; and the like. These emulsifiers may be used alone or in combination.

Among these anionic emulsifiers, preferred are fatty acid salts, alkylbenzene sulfonates, alkyl sulfosuccinates, alkyl sulfate ester salts, and polyoxyethylene alkyl ether sulfate ester salts, and particularly preferred are fatty acid salts and alkylbenzene sulfonates.

Preferably, at least one selected from the group consisting of alkylbenzene sulfonates, alkyl sulfosuccinates, alkyl sulfate ester salts, and polyoxyethylene alkyl ether sulfate ester salts are used together with fatty acid salts, particularly preferably, alkylbenzene sulfonates and fatty acid salts are used in combination because a trace amount of residual polymerization catalysts (particularly, aluminum and titanium) derived from the ion-polymerized polyisoprene can be more efficiently removed and the formation of aggregates can be suppressed during production of the latex composition. The fatty acid salts are preferably sodium rosinate and potassium rosinate, and the alkylbenzene sulfonates are preferably sodium dodecylbenzenesulfonate and potassium dodecylbenzenesulfonate.

Examples of ionic emulsifiers other than anionic emulsifiers include copolymerizable emulsifiers such as sulfo esters of $\alpha,\beta$-unsaturated carboxylic acids, sulfate esters of $\alpha,\beta$-unsaturated carboxylic acids, and sulfoalkylaryl ethers.

Further, any of nonionic emulsifiers such as polyoxyethylene alkyl ethers, polyoxyethylene alkyl phenol ethers, polyoxyethylene alkyl esters, and polyoxyethylene sorbitan alkyl esters may be used in combination as long as they do not inhibit coagulation by the action of a coagulant used in dip molding.

The amount of the emulsifier is preferably 0.1 to 50 parts by weight, more preferably 0.5 to 30 parts by weight relative to 100 parts by weight of the ion-polymerized polyisoprene. When two or more emulsifiers are used, the total amount of these emulsifiers used preferably falls within these ranges above. In other words, for example, when a combination of at least one selected from the group consisting of alkylbenzene sulfonates, alkyl sulfosuccinates, alkyl sulfate ester salts, and polyoxyethylene alkyl ether sulfate ester salts with a fatty acid salt is used, the total amount of these emulsifiers used preferably falls within the above-described ranges. When the emulsifier is used in an amount within the above-described ranges, the formation of aggregates during emulsion can be further suppressed.

When a combination of at least one selected from the group consisting of alkylbenzene sulfonates, alkyl sulfosuccinates, alkyl sulfate ester salts, and polyoxyethylene alkyl ether sulfate ester salts with a fatty acid salt is used as an anionic emulsifier, the ratio "fatty acid salt":"total amount of at least one emulsifier selected from the group consisting of alkylbenzene sulfonates, alkyl sulfosuccinates, alkyl sulfate ester salts, and polyoxyethylene alkyl ether sulfate ester salts" on a weight basis is in the range of preferably 1:1 to 10:1, more preferably 1:1 to 7:1. When at least one emulsifier selected from the group consisting of alkylbenzene sulfonates, alkyl sulfosuccinates, alkyl sulfate ester salts, and polyoxyethylene alkyl ether sulfate ester salts is used in a ratio within the above-described ranges, foaming of the latex can be suppressed during handling thereof. This can eliminate the need of processes such as long-term standing and addition of a defoamer, leading to improved work efficiency and reduced costs.

The amount of water used when a solution or microsuspension of ion-polymerized polyisoprene is emulsified in water in the presence of an emulsifier is preferably 10 to 1,000 parts by weight, more preferably 30 to 500 parts by weight, most preferably 50 to 100 parts by weight relative to 100 parts by weight of the solution of ion-polymerized polyisoprene. Examples of the type of water used include hard water, soft water, deionized water, distilled water, zeolite water, and the like. Preferred are soft water, deionized water, and distilled water.

To emulsify the solution or microsuspension of the ion-polymerized polyisoprene in the presence of the emulsifier, any apparatus commercially available as an emulsifying apparatus or a dispersing machine can be used without limitation. The emulsifier can be added to the solution or microsuspension of the ion-polymerized polyisoprene in any manner without limitation. The emulsifier may be added in advance to one or both of water and the solution or microsuspension of the ion-polymerized polyisoprene, or may be added at one time or in portions to the liquid to be emulsified during the emulsification process.

Examples of emulsifying apparatuses include batch emulsifying apparatuses such as a trade name "Homogenizer" (available from IKA Works GmbH & Co. KG), a trade name "POLYTRON" (available from Kinematica AG), and a trade name "TK AUTO-HOMO MIXER" (available from Tokushu Kika Kogyo Co., Ltd.); continuous emulsifying apparatuses such as a trade name "TK PIPELINE-HOMO MIXER" (available from Tokushu Kika Kogyo Co., Ltd.), a trade name "Colloid mill" (available from Shinko Pantec Co., Ltd.), a trade name "SLASHER" (available from NIPPON COKE & ENGINEERING CO., LTD.), a trade name "Trigonal wet grinder" (available from Mitsui Miike Kakoki K.K.), a trade name "CAVITRON" (available from Eurotec, Ltd.), a trade name "MILDER" (available from Pacific Machinery & Engineering Co., Ltd.), and a trade name "Fine Flow Mill" (available from Pacific Machinery & Engineering Co., Ltd.); high pressure emulsifying apparatuses such as a trade name "Microfluidizer" (available from MIZUHO INDUSTRIAL CO., LTD.), a trade name "NANOMIZER" (available from Nanomizer Inc.), and a trade name "APV GAULIN" (available from Manton-Gaulin Company); membrane emulsifying apparatuses such as a trade name "Membrane emulsifying apparatus" (available from REICA Co., Ltd.); vibratory emulsifying apparatuses such as a trade name "VIBROMIXER" (available from REICA Co., Ltd.); ultrasonic emulsifying apparatuses such as a trade name "Ultrasonic homogenizer" (available from Branson Ultrasonics Corporation); and the like. The conditions for the emulsification process using such an emulsifying apparatus are not particularly limited, and the treatment temperature, the treatment time, and the like may be appropriately selected to ensure a desired dispersion state.

The organic solvent is desirably removed from the emulsion prepared through the above-described emulsification process. Preferred methods for removing the organic solvent from the emulsion are methods with which the amount of the organic solvent (preferably an alicyclic hydrocarbon solvent or an aliphatic hydrocarbon solvent) in the resulting ion-polymerized polyisoprene latex can be reduced to 500 ppm by weight or less. For example, methods such as vacuum distillation, normal pressure distillation, water vapor distillation, and centrifugation can be used.

Further, to increase the solids content of the ion-polymerized polyisoprene latex, a concentration process by vacuum distillation, normal pressure distillation, centrifugation, membrane concentration, or the like may be performed as needed after the removal of the organic solvent. In particular, centrifugation is preferably performed because it can increase the solids content of the ion-polymerized polyisoprene latex and reduce the amount of residual emulsifier in the ion-polymerized polyisoprene latex.

The centrifugation is preferably performed, for example, using a continuous centrifuge under the conditions in which the centrifugal force is preferably 100 to 10,000 G, the solids content of the ion-polymerized polyisoprene latex before centrifugation is preferably 2 to 15 wt%, the feed flow rate into the centrifuge is preferably 500 to 1700 Kg/hr, and the back pressure (gauge pressure) of the centrifuge is preferably 0.03 to 1.6 MPa. Thus, the ion-polymerized polyisoprene latex can be obtained as a light solution after centrifugation. This process can reduce the amount of residual emulsifier in the ion-polymerized polyisoprene latex.

Further, the ion-polymerized polyisoprene latex may contain additives typically used in the field of latex, such as a pH adjuster, a defoamer, a preservative, a cross-linking agent, a chelating agent, an oxygen scavenger, a dispersant, and an antioxidant.

Examples of pH adjusters include alkali metal hydroxides such as sodium hydroxide and potassium hydroxide; alkali metal carbonates such as sodium carbonate and potassium carbonate; alkali metal hydrogen carbonates such as sodium hydrogen carbonate; ammonia; organic amine compounds such as trimethylamine and triethanolamine; and the like. Preferred are alkali metal hydroxides and ammonia.

The weight average molecular weight of the ion-polymerized polyisoprene is preferably 10,000 to 5,000,000, more preferably 500,000 to 5,000,000, still more preferably 800,000 to 3,000,000 as measured by gel permeation chromatography calibrated with polystyrene standards. When the weight average molecular weight is within the above-described ranges, a dip-molded article that tends to have improved tensile strength and tensile elongation can be obtained, the production of the ion-polymerized polyisoprene latex tends to become easier, and the production of the latex composition tends to become easier.

As described above, the ion-polymerized conjugated diene polymer (A) latex can be a styrene-isoprene-styrene block copolymer (SIS) latex. In the term "SIS", "S" represents a styrene block, and "I" represents an isoprene block.

The SIS latex (hereinafter, sometimes referred to as "ion-polymerized SIS latex") as the ion-polymerized conjugated diene polymer (A) latex is a latex containing the ion-polymerized SIS (hereinafter, sometimes referred to as "ion-polymerized SIS") obtained by block copolymerization of isoprene with styrene in an inert polymerization solvent, and water.

The ion-polymerized SIS constituting the ion-polymerized SIS latex can be prepared by conventionally known methods, for example, by block copolymerization (ionic polymerization) of isoprene with styrene in an inert polymerization solvent using an active organic metal such as n-butyllithium and the like as an initiator. Although the thus obtained polymer solution of the ion-polymerized SIS may be used as is to produce the ion-polymerized SIS latex, a solid ion-polymerized SIS can be isolated from the polymer solution, and used to produce the ion-polymerized SIS latex. The ion-polymerized SIS constituting the ion-polymerized SIS latex may be an anion-polymerized SIS, or may be a cation-polymerized SIS, and is preferably, but not limited to, an anion-polymerized SIS.

The method for producing an ion-polymerized SIS latex is preferably, but not particularly limited to, a method for producing an ion-polymerized SIS latex, including performing the above-described ionic polymerization to obtain a solution or microsuspension of an ion-polymerized SIS, which is dissolved or finely dispersed in an organic solvent; emulsifying the resulting solution or microsuspension of the ion-polymerized SIS in water in the presence of an emulsifier; and removing the organic solvent as needed. After synthesis, impurities including residual polymerization catalyst in the polymer solution may be removed. Furthermore, an antioxidant as described later may be added to the solution during or after polymerization.

Examples of usable organic solvents include the same organic solvents as those listed for the ion-polymerized polyisoprene. Preferred are aliphatic hydrocarbon solvents, aromatic hydrocarbon solvents, and alicyclic hydrocarbon solvents, and particularly preferred are n-hexane, cyclohexane, and toluene. The amount of the organic solvent used is usually 50 to 2,000 parts by weight, preferably 80 to 1,000 parts by weight, more preferably 100 to 500 parts by weight, still more preferably 150 to 300 parts by weight relative to 100 parts by weight of the ion-polymerized SIS.

Examples of emulsifiers include the same emulsifiers as those listed for the ion-polymerized polyisoprene.

Suitable are anionic emulsifiers, and particularly preferred are potassium rosinate and sodium dodecylbenzenesulfonate.

The amount of the emulsifier used is preferably 0.1 to 50 parts by weight, more preferably 0.5 to 30 parts by weight relative to 100 parts by weight of the ion-polymerized SIS. When the emulsifier is used in an amount within the above-described ranges, the resulting latex can have further enhanced stability.

The amount of water used in the aforementioned method for producing an ion-polymerized SIS latex is preferably 10 to 1,000 parts by weight, more preferably 30 to 500 parts by weight, most preferably 50 to 100 parts by weight relative to 100 parts by weight of the organic solvent solution of the ion-polymerized SIS. Examples of the type of water used include hard water, soft water, deionized water, distilled water, zeolite water, and the like. Further, any of polar solvents typified by alcohols such as methanol may be used in combination with water.

Examples of apparatuses for emulsifying an organic solvent solution or microsuspension of the ion-polymerized SIS in water in the presence of an emulsifier include the same as those listed for the ion-polymerized polyisoprene. The emulsifier can be added in any manner without limitation. The emulsifier may be added in advance to one or both of water and the organic solvent solution or microsuspension of the ion-polymerized SIS, or may be added at one time or in portions to the liquid to be emulsified during the emulsification process.

In the aforementioned method for producing an ion-polymerized SIS latex, the ion-polymerized SIS latex is preferably obtained by removing the organic solvent from the emulsion prepared through the emulsification process. The organic solvent can be removed from the emulsion by any method without limitation, and methods such as vacuum distillation, normal pressure distillation, water vapor distillation, and centrifugation can be used.

Further, to increase the solids content of the ion-polymerized SIS latex, a concentration process by vacuum distillation, normal pressure distillation, centrifugation, membrane concentration, or the like may be performed as needed after the removal of the organic solvent. The organic solvent can be removed while a defoamer is being added. The addition of the defoamer can prevent foaming.

The solids content of the ion-polymerized SIS latex is preferably 30 to 70 wt%, more preferably 40 to 70 wt%, still more preferably 50 to 70 wt%. When the solids content is not less than the lower limit of the above-described ranges, a tear resistant molded article such as a dip-molded article can be obtained. When the solids content is not more than the upper limit of the above-described ranges, excessive increase in viscosity of the ion-polymerized SIS latex can be suppressed, which can facilitate transfer of the SIS latex through a pipe or stirring of the SIS latex in a preparation tank.

Further, the ion-polymerized SIS latex may contain additives generally used in the field of latex, such as a pH adjuster, a defoamer, a preservative, a cross-linking agent, a chelating agent, an oxygen scavenger, a dispersant, and an antioxidant. Examples of pH adjusters include the same as those listed for the ion-polymerized polyisoprene. Preferred are alkali metal hydroxides and ammonia. Although the pH of the ion-polymerized SIS latex in this case is not particularly limited, it is preferred, as described later, that the pH of the latex composition prepared using materials such as the ion-polymerized SIS latex be controlled to 10 or more before maturation of the latex composition under predetermined conditions.

The content of styrene units in styrene blocks of the ion-polymerized SIS contained in the ion-polymerized SIS latex thus obtained is preferably 70 to 100 wt%, more preferably 90 to 100 wt%, still more preferably 100 wt% relative to the total monomer units.

The content of isoprene units in isoprene blocks in the ion-polymerized SIS is preferably 70 to 100 wt%, more preferably 90 to 100 wt%, still more preferably 100 wt% relative to the total monomer units.

The ratio between styrene units and isoprene units contained in the ion-polymerized SIS is in the range of usually 1:99 to 90:10, preferably 3:97 to 70:30, more preferably 5:95 to 50:50, still more preferably 10:90 to 30:70 as a weight ratio of "styrene units:isoprene units".

The weight average molecular weight of the ion-polymerized SIS is preferably 10,000 to 1,000,000, more preferably 50,000 to 500,000, still more preferably 100,000 to 300,000 as measured by gel permeation chromatography calibrated with polystyrene standards. When the weight average molecular weight of the ion-polymerized SIS is within the above-described ranges, a molded article, such as a dip-molded article, which tends to have an improved balance between tensile strength and flexibility can be obtained, and the production of the ion-polymerized SIS latex tends to become easier.

The ion-polymerized conjugated diene polymer (A) used in the present invention can be, but is not limited to, ion-polymerized polyisoprene, ion-polymerized SIS, or the like as describe above. A butadiene polymer obtained by ionic polymerization, a styrene-butadiene copolymer obtained by ionic polymerization, or the like may also be used.

The butadiene polymer obtained by ionic polymerization may be a homopolymer of 1,3-butadiene as a conjugated diene monomer, or may be a copolymer formed by copolymerization of 1,3-butadiene with a different ethylenically unsaturated monomer that can copolymerize with 1,3-butadiene.

The styrene-butadiene copolymer obtained by ionic polymerization may be a copolymer formed by copolymerization of 1,3-butadiene as a conjugated diene monomer with styrene, or may be a copolymer formed by copolymerization of these monomers with a different ethylenically unsaturated monomer that is copolymerizable with the former monomers and is used as required in addition to the former monomers.

The weight average molecular weight of the ion-polymerized conjugated diene polymer (A) is preferably 10,000 to 5,000,000, more preferably 50,000 to 5,000,000, still more preferably 100,000 to 3,000,000 as measured by gel permeation chromatography calibrated with polystyrene standards. When the weight average molecular weight of the ion-polymerized conjugated diene polymer (A) is within the above-described ranges, a molded article, such as a dip-molded article, which tends to have an improved balance between tensile strength and flexibility can be obtained, and the production of the ion-polymerized SIS latex tends to become easier.

The content of cis bond units in the conjugated diene monomer units contained in the ion-polymerized conjugated diene polymer (A) is preferably more than 70 wt%, more preferably 90 wt% or more, still more preferably 95 wt% or more relative to the total conjugated diene monomer units. When the content of cis bond units is within the above-described ranges, a dip-molded article having further reduced tensile elastic modulus and further improved flexibility can be obtained. The content of cis bond units in the conjugated diene monomer units can be determined, for example, by $^1$H-NMR analysis.

Specifically, when the ion-polymerized conjugated diene polymer (A) contains isoprene units, there are four types of isoprene units which differ in bonding geometry of isoprene units as follows: cis bond units (1,4-cis structure), trans bond units (1,4-trans structure), 1,2-vinyl bond units, and 3,4-vinyl bond units. When the ion-polymerized conjugated diene polymer (A) contains isoprene units, the content of cis bond units in the isoprene units contained in the ion-polymerized conjugated diene polymer (A) is preferably more than 70 wt%, more preferably 90 wt% or more, still more preferably 95 wt% or more relative to the total isoprene units. When the content of cis bond units is within the above-described ranges, a dip-molded article having improved mechanical strength, and also having further reduced tensile elastic modulus and further improved flexibility can be obtained. The contents of cis bond units, trans bond units, 1,2-vinyl bond units, and 3,4-vinyl bond units in the isoprene units can be determined, for example, by $^1$H-NMR analysis.

In addition, when the ion-polymerized conjugated diene polymer (A) contains butadiene units, there are three types of butadiene units which differ in bonding geometry of butadiene units as follows: cis bond units (1,4-cis structure), trans bond units (1,4-trans structure), and 1,2-vinyl bond units. When the ion-polymerized conjugated diene polymer (A) contains butadiene units, the content of cis bond units in the butadiene units contained in the ion-polymerized conjugated diene polymer (A) is preferably more than 70 wt%, more preferably 90 wt% or more, still more preferably 95 wt% or more relative to the total butadiene units. When the content of cis bond units is within the above-described ranges, a dip-molded article having further reduced tensile elastic modulus and further improved flexibility can be obtained. The contents of cis bond units, trans bond units, and 1,2-vinyl bond units in the butadiene units can be determined, for example, by $^1$H-NMR analysis.

The ion-polymerized conjugated diene polymer (A) has a polymer Mooney viscosity ($ML_{1+4}$, 100°C) of preferably 50 to 80, more preferably 60 to 80, still more preferably 70 to 80.

The ion-polymerized conjugated diene polymer (A) used in the present invention can be produced by modifying a polymer in an aqueous phase, the polymer being obtained by ionic polymerization of a monomer mixture containing conjugated diene monomers, from the viewpoint of producing a dip-molded article having improved mechanical strength. Specifically, the ion-polymerized conjugated diene polymer (A) can be produced by carboxylic acid-modification in an aqueous phase.

In addition, the ion-polymerized conjugated diene polymer (A) used in the present invention may be an acid-modified ion-polymerized conjugated diene polymer (A) obtained by modification with a monomer containing an acidic group, or may be a carboxy-modified ion-polymerized conjugated diene polymer (A). The carboxy-modified ion-polymerized conjugated diene polymer (A) can be obtained by modifying the above-described ion-polymerized conjugated diene polymer (A) before carboxy modification with a monomer having a carboxyl group.

The ion-polymerized conjugated diene polymer (A) can be modified with the monomer having a carboxyl group by any method without limitation. Examples thereof include graft-polymerization of the monomer having a carboxyl group onto the ion-polymerized conjugated diene polymer (A) before carboxy-modification in an aqueous phase. Any method can be used without limitation to graft-polymerize the monomer having a carboxyl group onto the conjugated diene polymer in an aqueous phase, and conventionally known methods may be used. One preferred example is that after the monomer having a carboxyl group and a graft polymerization catalyst are added to the ion-polymerized conjugated diene polymer (A) latex, the monomer having a carboxyl group is reacted with the ion-polymerized conjugated diene polymer (A) in an aqueous phase.

Examples of graft polymerization catalysts include, but should not be limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, di-t-butyl peroxide, isobutyryl peroxide, and benzoyl peroxide; azo compounds such as 2,2'-azobisisobutyronitrile, azobis-2,4-dimethylvaleronitrile, and methyl azobisisobutyrate; and the like. Preferred are organic peroxides, and particularly preferred is 1,1,3,3-tetramethylbutyl hydroperoxide because a dip-molded article having further enhanced tensile strength can be obtained. These graft polymerization catalysts may be used alone or in combination.

The above-described graft polymerization catalysts can be used alone or in combination. Although the amount of the graft polymerization catalyst varies depending on its type, the amount is preferably 0.1 to 10 parts by weight, more preferably 0.2 to 5 parts by weight relative to 100 parts by weight of the ion-polymerized conjugated diene polymer (A). Further, the graft polymerization catalyst can be added by any method without limitation, and any known addition method such as one-time addition, portion-wise addition, or continuous addition can be used.

Organic peroxides can be used in combination with reductants as redox polymerization initiators. Examples of the reductants include, but are not particularly limited to, sodium formaldehyde sulfoxylate (SFS), hydrosulfite, dimethylamine, ascorbic acid, sucrose, ferrous sulfate, and the like. These reductants may be used alone or in combination.

Although the amount of reductant(s) added is not particularly limited, the amount is preferably 0.01 to 1 part by weight relative to 1 part by weight of organic peroxide(s).

Any method for adding the organic peroxide and the reductant can be used without limitation, and any known addition method such as one-time addition, portion-wise addition, or continuous addition can be used.

The reaction temperature during the reaction of the monomer having a carboxyl group with the ion-polymerized conjugated diene polymer (A) is not particularly limited, and is preferably 15 to 80°C, more preferably 30 to 50°C. The reaction time for the reaction of the monomer having a carboxyl group with the ion-polymerized conjugated diene polymer (A) may be appropriately set according to the aforementioned reaction temperature, and is preferably 30 to 300 minutes, more preferably 60 to 120 minutes.

The solids content of the polymerized conjugated diene polymer (A) latex before the reaction of the monomer having a carboxyl group with the ion-polymerized conjugated diene polymer (A) is not particularly limited, and is preferably 5 to 60 wt%, more preferably 10 to 40 wt%.

Examples of monomers having a carboxyl group include ethylenically unsaturated monocarboxylic acid monomers such as acrylic acid and methacrylic acid; ethylenically unsaturated polyvalent carboxylic acid monomers such as itaconic acid, maleic acid, fumaric acid, and butene tricarboxylic acid; ethylenically unsaturated polyvalent carboxylic acid partial ester monomers such as monobutyl fumarate, monobutyl maleate, and mono-2-hydroxypropyl maleate; polyvalent carboxylic acid anhydrides such as maleic anhydride and citraconic anhydride; and the like. Preferred are ethylenically unsaturated monocarboxylic acid monomers, more preferred are acrylic acid and methacrylic acid, and particularly preferred is methacrylic acid because further remarkable effects due to carboxy modification are achieved. These monomers may be used alone or in combination. The aforementioned carboxyl group is intended to encompass forms of salts with alkali metals, ammonia, or the like.

The amount of the monomer having a carboxyl group used is preferably 0.01 to 100 parts by weight, more preferably 0.01 to 40 parts by weight, still more preferably 0.5 to 20 parts by weight, further still more preferably 2 to 5 parts by weight relative to 100 parts by weight of the ion-polymerized conjugated diene polymer (A). When the monomer having a carboxyl group is used in an amount within the above-described ranges, the latex composition can have more appropriate viscosity and therefore is easy to transfer, and a dip-molded article having further enhanced mechanical properties can be obtained.

The monomer having a carboxyl group can be added to the ion-polymerized conjugated diene polymer (A) latex by any method without limitation, and any known addition method such as one-time addition, portion-wise addition, or continuous addition can be used.

The degree of modification of the carboxy-modified ion-polymerized conjugated diene polymer (A) with the monomer having a carboxyl group may be appropriately controlled according to the intentional use of a dip-molded article to be obtained, and is preferably 0.01 to 10 wt%, more preferably 0.2 to 5 wt%, still more preferably 0.3 to 3 wt%, further still more preferably 0.4 to 2 wt%, particularly preferably 0.4 to 1 wt%. The degree of modification is represented by the following formula:

$$\text{Degree of modification (wt\%)} = (X/Y) \times 100$$

In the above formula, X represents the weight of units of the monomer having a carboxyl group in the carboxy-modified ion-polymerized conjugated diene polymer (A), and Y represents the weight of the carboxy-modified ion-polymerized conjugated diene polymer (A). X can be determined by performing $^1$H-NMR analysis on the carboxy-modified ion-polymerized conjugated diene polymer (A) and performing a calculation based on the results of the $^1$H-NMR analysis, or by determining its acid content by neutralization titration and performing a calculation based on the resulting acid content.

The ion-polymerized conjugated diene polymer (A) used in the present invention (including the acid-modified ion-polymerized conjugated diene polymer (A)) may contain additives that are generally blended in the field of latex, such as a pH adjuster, a defoamer, a preservative, a chelating agent, an oxygen scavenger, a dispersant, and an antioxidant.

Examples of pH adjusters include alkali metal hydroxides such as sodium hydroxide and potassium hydroxide;

alkali metal carbonates such as sodium carbonate and potassium carbonate; alkali metal hydrogen carbonates such as sodium hydrogen carbonate; ammonia; organic amine compounds such as trimethylamine and triethanolamine; and the like. Preferred are alkali metal hydroxides or ammonia.

The solids content of a latex of the ion-polymerized conjugated diene polymer (A) used in the present invention (including the acid-modified ion-polymerized conjugated diene polymer (A)) is preferably 30 to 70 wt%, more preferably 40 to 70 wt%, still more preferably 50 to 70 wt%. When the solids content is within the above-described ranges, formation of aggregates in the latex can be more effectively suppressed, and separation of polymer particles during storage of the latex can be more effectively suppressed.

The volume average particle size of the ion-polymerized conjugated diene polymer (A) constituting the ion-polymerized conjugated diene polymer (A) latex is not particularly limited, and is preferably 0.1 to 10 $\mu$m, more preferably 0.2 to 5 $\mu$m, still more preferably 0.3 to 3.0 $\mu$m, particularly preferably 0.5 to 2.0 $\mu$m. When the volume average particle size of the ion-polymerized conjugated diene polymer (A) is within the above-described ranges, the ion-polymerized conjugated diene polymer (A) latex can have appropriate viscosity and therefore is easily handled, and the latex composition can have further enhanced stability. The volume average particle size can be measured using a laser diffraction particle size distribution analyzer.

<Emulsion-polymerized conjugated diene polymer (B) latex>

The latex composition according to the present invention also comprises an emulsion-polymerized conjugated diene polymer (B) latex in addition to the above-described ion-polymerized conjugated diene polymer (A) latex.

Generally, as compared to the ion-polymerized conjugated diene polymer, an emulsion-polymerized conjugated diene polymer formed from the same monomers tends to have higher glass transition temperature (Tg), higher tensile elastic modulus, and inferior flexibility. Thus, when a dip-molded article that requires excellent flexibility is produced, usually, an emulsion-polymerized conjugated diene polymer latex is not used, but an ion-polymerized conjugated diene polymer latex is used.

According to the present invention, the emulsion-polymerized conjugated diene polymer (B) latex is also contained in addition to the ion-polymerized conjugated diene polymer (A) latex. As a result, unexpectedly, a dip-molded article obtained by using such a latex composition can have low tensile elastic modulus and excellent flexibility. Furthermore, such a latex composition according to the present invention also has excellent stability, and can sufficiently suppress the formation of aggregates, for example, even when the latex composition according to the present invention is stored or subjected to maturation for 48 hours.

The emulsion-polymerized conjugated diene polymer (B) latex used in the present invention is a latex containing the emulsion-polymerized conjugated diene polymer (B) obtained by emulsion-polymerization of a monomer mixture containing conjugated diene monomers, and water.

The emulsion-polymerized conjugated diene polymer (B) contains conjugated diene monomer units. Examples of the conjugated diene monomers constituting conjugated diene monomer units include butadiene, isoprene, chloroprene, 1,3-pentadiene, and the like. Among these, isoprene or butadiene is preferred, and isoprene is more preferred because a dip-molded article having further reduced tensile elastic modulus and further improved flexibility can be obtained. These monomers may be used alone or in combination. The content of the conjugated diene monomer units in the emulsion-polymerized conjugated diene polymer (B) is preferably 45.0 to 100 wt%, more preferably 60.0 to 100 wt%, still more preferably 95.0 to 99.9 wt%, particularly preferably 97.0 to 99.5 wt%, most preferably 97.5 to 99.0 wt% because a dip-molded article having further reduced tensile elastic modulus and further improved flexibility can be obtained.

The content of cis bond units in the conjugated diene monomer units contained in the emulsion-polymerized conjugated diene polymer (B) is preferably 10 to 70 wt%, more preferably 10 to 50 wt%, still more preferably 10 to 30 wt% relative to the total conjugated diene monomer units. When the content of cis bond units is within the above-described ranges, a dip-molded article having further reduced tensile elastic modulus and further improved flexibility can be obtained. The content of cis bond units in the conjugated diene monomer units can be determined, for example, by $^1$H-NMR analysis.

Specifically, when the emulsion-polymerized conjugated diene polymer (B) contains isoprene units, the content of cis bond units in the isoprene units contained in the emulsion-polymerized conjugated diene polymer (B) is preferably 10 to 70 wt%, more preferably 10 to 50 wt%, still more preferably 10 to 30 wt% relative to the total isoprene units. When the content of cis bond units is within the above-described ranges, a dip-molded article having further reduced tensile elastic modulus and further improved flexibility can be obtained.

On the other hand, when the emulsion-polymerized conjugated diene polymer (B) contains butadiene units, the content of cis bond units in the butadiene units contained in the emulsion-polymerized conjugated diene polymer (B) is preferably 10 to 70 wt%, more preferably 10 to 50 wt%, still more preferably 10 to 30 wt% relative to the total butadiene units. When the content of cis bond units is within the above-described ranges, a dip-molded article having further reduced tensile elastic modulus and further improved flexibility can be obtained.

In addition to conjugated diene monomer units, the emulsion-polymerized conjugated diene polymer (B) preferably contains a different ethylenically unsaturated monomer unit that can copolymerize with conjugated diene monomers. Examples of such different ethylenically unsaturated monomers include ethylenically unsaturated carboxylic acid monomer units, vinyl aromatic monomers, ethylenically unsaturated carboxylic acid ester monomers, ethylenically unsaturated nitrile monomers, fluoroalkyl vinyl ethers, ethylenically unsaturated amide monomers, cross-linkable monomers, and the like, and specific examples of these monomers include those described above, and the like. These monomers can be used alone or in combination. The content of the different ethylenically unsaturated monomer units in the emulsion-polymerized conjugated diene polymer (B) is preferably 0 to 55.0 wt%, more preferably 0 to 40.0 wt%, still more preferably 0.1 to 5.0 wt%, particularly preferably 0.5 to 3.0 wt%, most preferably 1.0 to 2.5 wt% relative to the total monomer units because a dip-molded article having further reduced tensile elastic modulus and further improved flexibility can be obtained.

In addition to conjugated diene monomer units, the emulsion-polymerized conjugated diene polymer (B) preferably contains ethylenically unsaturated carboxylic acid monomer units. The content of the ethylenically unsaturated carboxylic acid monomer units in the emulsion-polymerized conjugated diene polymer (B) is preferably 0 to 10.0 wt%, more preferably 0.1 to 5.0 wt%, still more preferably 0.5 to 3.0 wt%, particularly preferably 1.0 to 2.5 wt% relative to the total monomer units because a dip-molded article having further reduced tensile elastic modulus and further improved flexibility can be obtained.

When the emulsion-polymerized conjugated diene polymer (B) contains two or more monomer units, the bonding pattern of the monomers can be varied such as block, tapered, and random, and is preferably random. Specifically, when the emulsion-polymerized conjugated diene polymer (B) is a copolymer, a random copolymer is preferred.

The emulsion-polymerized conjugated diene polymer (B) is not particularly limited as long as it is a conjugated diene polymer obtained by emulsion-polymerization, and examples of the polymer include synthetic polyisoprenes, nitrile group-containing conjugated diene copolymers, butadiene polymers, styrene-butadiene copolymers, and the like. Among these, synthetic polyisoprenes and nitrile group-containing conjugated diene copolymers are preferred, and synthetic polyisoprenes are more preferred because a dip-molded article having further reduced tensile elastic modulus and further improved flexibility can be obtained.

The synthetic polyisoprene as the emulsion-polymerized conjugated diene polymer (B) (hereinafter, sometimes referred to as "emulsion-polymerized polyisoprene") may be an isoprene homopolymer, or may be a copolymer with a different ethylenically unsaturated monomer that can copolymerize with isoprene. The content of isoprene units in the emulsion-polymerized polyisoprene is preferably 90.0 to 100 wt%, more preferably 95.0 to 99.9 wt%, still more preferably 97.0 to 99.5 wt%, particularly preferably 97.5 to 99.0 wt% relative to the total monomer units because a dip-molded article having further reduced tensile elastic modulus and further improved flexibility can be obtained.

Examples of the different ethylenically unsaturated monomer that can copolymerize with isoprene include conjugated diene monomers other than isoprene, such as butadiene, chloroprene, and 1,3-pentadiene; ethylenically unsaturated carboxylic acid monomer units; vinyl aromatic monomers; ethylenically unsaturated carboxylic acid ester monomers; ethylenically unsaturated nitrile monomers; fluoroalkyl vinyl ethers; ethylenically unsaturated amide monomers; cross-linkable monomers; and the like, and specific examples of these monomers include those described above, and the like. These monomers can be used alone or in combination. Among these, ethylenically unsaturated carboxylic acid monomers are preferred, ethylenically unsaturated monocarboxylic acids are more preferred, methacrylic acid or methacrylic acid is still more preferred, and methacrylic acid is most preferred. The ethylenically unsaturated carboxylic acid monomers can also be used as alkali metal salts or ammonium salts. The ethylenically unsaturated carboxylic acid monomers can be used alone or in combination. The content of the different ethylenically unsaturated monomer units that can copolymerize with isoprene in the emulsion-polymerized polyisoprene is preferably 0 to 10.0 wt%, more preferably 0.1 to 5.0 wt%, still more preferably 0.5 to 3.0 wt%, particularly preferably 1.0 to 2.5 wt% relative to the total monomer units because a dip-molded article having further reduced tensile elastic modulus and further improved flexibility can be obtained.

The nitrile group-containing conjugated diene copolymer as the emulsion-polymerized conjugated diene polymer (B) (hereinafter, sometimes referred to as "emulsion-polymerized nitrile group-containing conjugated diene copolymer") contains conjugated diene monomer units and ethylenically unsaturated nitrile monomer units.

Specific examples of the conjugated diene monomers that constitute conjugated diene monomer units contained in the emulsion-polymerized nitrile group-containing conjugated diene copolymer include those described above, and the like. Among these, 1,3-butadiene and isoprene are preferred, and 1,3-butadiene is more preferred. These conjugated diene monomers can be used alone or in combination. The content of conjugated diene monomer units in the emulsion-polymerized nitrile group-containing conjugated diene copolymer is preferably 45 to 80 wt%, more preferably 55 to 79.9 wt%, still more preferably 57 to 74.5 wt%, particularly preferably 57.5 to 69 wt%. When the content of the conjugated diene monomer units is within the above-described ranges, a dip-molded article having sufficient tensile strength and also having excellent texture and improved elongation can be obtained.

Specific examples of the ethylenically unsaturated nitrile monomers that constitute ethylenically unsaturated nitrile monomer units contained in the emulsion-polymerized nitrile group-containing conjugated diene copolymer include those described above, and the like. Among these, acrylonitrile and methacrylonitrile are preferred, and acrylonitrile is more preferred. These ethylenically unsaturated nitrile monomers can be used alone or in combination. The content of ethylenically unsaturated nitrile monomer units formed of the ethylenically unsaturated nitrile monomers in the nitrile group-containing conjugated diene copolymer is preferably 20 to 45 wt%, more preferably 20 to 40 wt%, still more preferably 25 to 40 wt%, particularly preferably 30 to 40 wt%. When the content of the ethylenically unsaturated nitrile monomer units is within the above-described ranges, a dip-molded article having sufficient tensile strength and also having excellent texture and improved elongation can be obtained.

In addition to the conjugated diene monomer units and the ethylenically unsaturated nitrile monomer units, the emulsion-polymerized nitrile group-containing conjugated diene copolymer can contain a different ethylenically unsaturated monomer unit that can copolymerize with these monomer units. Examples of such different ethylenically unsaturated monomers constituting these units include ethylenically unsaturated carboxylic acid monomer units, vinyl aromatic monomers, ethylenically unsaturated carboxylic acid ester monomers, fluoroalkyl vinyl ethers, ethylenically unsaturated amide monomers, cross-linkable monomers, and the like, and specific examples of these monomers include those described above, and the like. These monomers can also be used alone or in combination. These monomers can be used alone or in combination. Among these, ethylenically unsaturated carboxylic acid monomers are preferred, ethylenically unsaturated monocarboxylic acids are more preferred, methacrylic acid or methacrylic acid is still more preferred, and methacrylic acid is most preferred. These ethylenically unsaturated carboxylic acid monomers can be used as alkali metal salts or ammonium salts. The ethylenically unsaturated carboxylic acid monomers can be used alone or in combination. The content of the different ethylenically unsaturated monomer unit that can copolymerize in the emulsion-polymerized nitrile group-containing conjugated diene copolymer is preferably 0 to 10.0 wt%, more preferably 0.1 to 5.0 wt%, still more preferably 0.5 to 3.0 wt%, particularly preferably 1.0 to 2.5 wt% relative to the total monomer units because a dip-molded article having further reduced tensile elastic modulus and further improved flexibility can be obtained.

The emulsion-polymerized conjugated diene polymer (B) used in the present invention can be, but is not limited to, emulsion-polymerized polyisoprene, an emulsion-polymerized nitrile group-containing conjugated diene copolymer, or the like as described above. A butadiene polymer obtained by emulsion-polymerization, a styrene-butadiene copolymer obtained by emulsion-polymerization, or the like may also be used.

The butadiene polymer obtained by emulsion-polymerization may be a homopolymer of 1,3-butadiene as a conjugated diene monomer, or may be a copolymer formed by copolymerization of 1,3-butadiene as a conjugated diene monomer with a different ethylenically unsaturated monomer that can copolymerize with 1,3-butadiene.

The styrene-butadiene copolymer obtained by emulsion-polymerization is a copolymer formed by copolymerization of 1,3-butadiene as a conjugated diene monomer with styrene, and may be a copolymer formed by copolymerization of these monomers with a different ethylenically unsaturated monomer that can copolymerize with these monomers and is used as needed in addition to these monomers.

The emulsion-polymerized conjugated diene polymer (B) latex can be obtained by emulsion-polymerization of a monomer mixture containing conjugated diene monomers and optionally containing a different monomer.

In the emulsion polymerization of the monomer mixture containing the conjugated diene monomers and, optionally, copolymerizable ethylenically unsaturated monomers used as required, polymerization auxiliary materials generally used, such as an emulsifier, a polymerization initiator, and a molecular weight modifier, can be used. These polymerization auxiliary materials can be added by any method without limitation, and any method such as initial one-time addition, portion-wise addition, or continuous addition may be employed.

Examples of emulsifiers include, but should not be limited to, nonionic emulsifiers such as polyoxyethylene alkyl ethers, polyoxyethylene alkyl phenol ethers, polyoxyethylene alkyl esters, and polyoxyethylene sorbitan alkyl esters; anionic emulsifiers such as alkylbenzene sulfonates including potassium dodecylbenzenesulfonate and sodium dodecylbenzenesulfonate, higher alcohol sulfate ester salts, and alkyl sulfosuccinates; cationic emulsifiers such as alkyl trimethyl ammonium chlorides, dialkyl ammonium chlorides, and benzyl ammonium chloride; copolymerizable emulsifiers such as sulfo esters of $\alpha,\beta$-unsaturated carboxylic acids, sulfate esters of $\alpha,\beta$-unsaturated carboxylic acids, and sulfoalkyl aryl ethers; and the like. Among these, preferred are anionic emulsifiers, more preferred are alkylbenzene sulfonates, and particularly preferred are potassium dodecylbenzenesulfonate and sodium dodecylbenzenesulfonate. These emulsifiers can be used alone or in combination. The amount of the emulsifier used is preferably 0.1 to 10 parts by weight relative to 100 parts by weight of the monomer mixture.

Examples of polymerization initiators include, but should not be limited to, inorganic peroxides such as sodium persulfate, potassium persulfate, ammonium persulfate, potassium perphosphate, and hydrogen peroxide; organic peroxides such as diisopropylbenzene hydroperoxide, cumene hydroperoxide, t-butyl hydroperoxide, 1,1,3,3-tetramethylbutyl hydroperoxide, 2,5-dimethylhexane-2,5-dihydroperoxide, di-t-butyl peroxide, di-$\alpha$-cumyl peroxide, acetyl peroxide, isobutyryl peroxide, and benzoyl peroxide; azo compounds such as azobisisobutyronitrile, azobis-2,4-dimethylvaleronitrile, and methyl azobisisobutyrate; and the like. These polymerization initiators can be used alone or in combination. The amount of the polymerization initiator(s) used is preferably 0.01 to 10 parts by weight, more preferably 0.01 to 2 parts by weight relative to 100 parts by weight of the monomer mixture.

Further, the peroxide initiators can be used in combination with reductants as redox polymerization initiators. Examples of such reductants include, but should not be limited to, compounds containing reduced metal ions, such as ferrous sulfate and cuprous naphthenate; sulfonic acid compounds such as sodium methanesulfonate; amine compounds such as dimethylaniline; and the like. These reductants can be used alone or in combination. The amount of the reductant(s) is 3 to 1000 parts by weight relative to 100 parts by weight of the peroxide(s) .

The amount of water used in emulsion polymerization is preferably 80 to 600 parts by weight, particularly preferably 100 to 200 parts by weight relative to 100 parts by weight of all monomers used.

Examples of the method of adding the monomers include a method of adding the monomers to be used into a reactor all at once; a method of continuously or intermittently adding the monomers as the polymerization proceeds; a method of adding a portion of the monomers to react the monomers to a specific conversion ratio, and then continuously or intermittently adding the remaining monomers to complete polymerization; and the like. Any one of the methods may be used. When the monomers are mixed and the mixture is continuously or intermittently added, the composition of the mixture may be fixed or varied. Further, the monomers used may be mixed in advance and then added to the reactor, or may be separately added to the reactor.

Further, polymerization auxiliary materials such as a chelating agent, a dispersant, a pH adjuster, an oxygen scavenger, and a particle size modifier can be used as needed, and both of the type and the amount of these polymerization auxiliary materials used are not particularly limited.

The polymerization temperature during emulsion polymerization, which is not particularly limited, is usually 3 to 95°C, preferably 5 to 60°C. The polymerization time is about 5 to 40 hours.

The monomer mixture is subjected to emulsion polymerization as described above, and the polymerization reaction is stopped by cooling the polymerization system or adding a polymerization terminator when a predetermined polymerization conversion ratio is reached. The polymerization conversion ratio at which the polymerization reaction is stopped is preferably 90 wt% or more, more preferably 93 wt% or more.

Examples of polymerization terminators include, but should not be limited to, hydroxylamine, hydroxyamine sulfate, diethylhydroxylamine, and hydroxyamine sulfonic acid and alkali metal salts thereof, sodium dimethyldithiocarbamate, hydroquinone derivatives, catechol derivatives, and aromatic hydroxydithiocarboxylic acids, such as hydroxydimethylbenzenethiocarboxylic acid, hydroxydiethylbenzenedithiocarboxylic acid, and hydroxydibutylbenzenedithiocarboxylic acid, and alkali metal salts thereof, and the like. The amount of the polymerization terminator used is preferably 0.05 to 2 parts by weight relative to 100 parts by weight of the monomer mixture.

After the polymerization reaction is stopped, as needed, unreacted monomers are removed, and the solids content and the pH are adjusted, so that a latex of the emulsion-polymerized conjugated diene polymer (B) can be obtained.

Further, an antioxidant, a preservative, an antibacterial agent, a dispersant, and the like may be appropriately added to the latex of the emulsion-polymerized conjugated diene polymer (B).

The volume average particle size of the emulsion-polymerized conjugated diene polymer (B) constituting the emulsion-polymerized conjugated diene polymer (B) latex is preferably 10 to 200 nm, more preferably 20 to 150 nm, still more preferably 40 to 130 nm, particularly preferably 60 to 100 nm.

The emulsion-polymerized conjugated diene polymer (B) in the emulsion-polymerized conjugated diene polymer (B) latex has a weight average molecular weight of preferably 20,000 to 1,000,000, more preferably 150,000 to 600,000, still more preferably 200,000 to 350,000 as measured by gel permeation chromatography calibrated with polystyrene standards. When the weight average molecular weight of the emulsion-polymerized conjugated diene polymer (B) is within the above-described ranges, a dip-molded article having further enhanced mechanical properties can be obtained.

The solids content of the emulsion-polymerized conjugated diene polymer (B) latex used in the present invention is preferably 1 to 50 wt%, more preferably 1.5 to 30 wt%, still more preferably 2 to 10 wt%.

The content of the emulsion-polymerized conjugated diene polymer (B) latex in the latex composition according to the present invention is such an amount that the content of the emulsion-polymerized conjugated diene polymer (B) contained in the an emulsion-polymerized conjugated diene polymer (B) latex is preferably 0.1 to 3 parts by weight, more preferably 0.15 to 2.5 parts by weight, still more preferably 0.2 to 2 parts by weight, particularly preferably 0.3 to 1.5 parts by weight, most preferably 0.5 to 1 part by weight relative to 100 parts by weight of the ion-polymerized conjugated diene polymer (A) contained in the ion-polymerized conjugated diene polymer (A) latex. When the content of the emulsion-polymerized conjugated diene polymer (B) latex is within the above-described ranges, the stability of the latex composition can be further improved, and a dip-molded article having improved mechanical strength and also having further reduced tensile elastic modulus and further improved flexibility can be obtained.

Moreover, it is preferred that the latex composition of the present invention further contain a sulfur-based vulcanizing agent. Examples of sulfur-based vulcanizing agents include, but should not be limited to, sulfur-containing compounds such as sulfur such as powder sulfur, flowers of sulfur, precipitated sulfur, colloidal sulfur, surface-treated sulfur, and insoluble sulfur; sulfur chloride, sulfur dichloride, morpholine disulfide, alkyl phenol disulfides, caprolactam disulfide (N,N'-dithio-bis(hexahydro-2H-azepin-2-one)), phosphorus-containing polysulfides, polymer polysulfides, and 2-(4'-morpholinodithio)benzothiazole; and the like. Among these, sulfur can be preferably used. These sulfur-based vulcanizing agents can be used alone or in combination.

The amount of the sulfur-based vulcanizing agent used is not particularly limited, but is preferably 0.1 to 10 parts by weight, more preferably 0.2 to 3 parts by weight relative to 100 parts by weight of the ion-polymerized conjugated diene polymer (A) contained in the latex composition. When the content of the sulfur-based vulcanizing agent is within the above-described ranges, a dip-molded article having further enhanced mechanical properties can be obtained.

Moreover, the latex composition may further contain a vulcanization accelerator. As the vulcanization accelerator, those conventionally used in dip molding can be used, and examples of the vulcanization accelerator include xanthogen compounds, such as xanthic acids, xanthates, xanthogen disulfides (a compound in which two or more xanthic acids are bonded via sulfur atoms or the like), xanthogen polysulfides (a compound in which three or more xanthic acids are bonded via sulfur atoms or the like); dithiocarbamic acids, such as diethyldithiocarbamic acid, dibutyldithiocarbamic acid, di-2-ethylhexyldithiocarbamic acid, dicyclohexyldithiocarbamic acid, diphenyldithiocarbamic acid, and dibenzyldithiocarbamic acid, and zinc salts thereof; 2-mercaptobenzothiazole, zinc 2-mercaptobenzothiazole, 2-mercaptothiazoline, dibenzothiazyl disulfide, 2-(2,4-dinitrophenylthio)benzothiazole, 2-(N,N-diethylthiocarbaylthio)benzothiazole, 2-(2,6-dimethyl-4-morpholinothio)benzothiazole, 2-(4'-morpholino-dithio)benzothiazole, 4-morpholinyl-2-benzothiazyl disulfide, 1,3-bis(2-benzothiazyl mercaptomethyl)urea, and the like. Among these, from the viewpoint of avoiding occurrence of delayed (Type IV) allergic reactions, xanthogen compounds are preferred, zinc diisopropyl xanthate and zinc dibutyl xanthate are more preferred, and zinc diisopropyl xanthate is particularly preferred. The vulcanization accelerators may be used alone or in combination.

The amount of the vulcanization accelerator used is not particularly limited, but is preferably 0.05 to 5 parts by weight, more preferably 0.1 to 3 parts by weight, still more preferably 0.1 to 2 parts by weight relative to 100 parts by weight of the ion-polymerized conjugated diene polymer (A) contained in the latex composition. When the vulcanization accelerator is used in an amount within the above-described ranges, a dip-molded article having further enhanced mechanical properties can be obtained.

Moreover, the latex composition can further contain optional compounding agents such as an antioxidant; a dispersant; an activator; a reinforcing agent such as carbon black, silica, or talc; a filler such as calcium carbonate or clay; an ultraviolet absorbing agent; and a plasticizer.

Examples of antioxidants include sulfur atom-free phenolic antioxidants such as 2,6-di-4-methylphenol, 2,6-di-t-butylphenol, butylhydroxyanisole, 2,6-di-t-butyl-$\alpha$-dimethylamino-p-cresol, octadecyl-3-(3,5-di-t-butyl-4-hydroxyphenyl)propionate, styrenated phenol, 2,2'-methylene-bis(6-$\alpha$-methyl-benzyl-p-cresol), 4,4'-methylenebis(2,6-di-t-butylphenol), 2,2'-methylene-bis(4-methyl-6-t-butylphenol), alkylated bisphenols, and a butylated reaction product of p-cresol with dicyclopentadiene; thiobisphenolic antioxidants such as 2,2'-thiobis-(4-methyl-6-t-butylphenol), 4,4'-thiobis-(6-t-butyl-o-cresol), and 2,6-dit-butyl-4-(4,6-bis(octylthio)-1,3,5-triazine-2-ylamino)phenol; phosphite ester antioxidants such as tris(nonylphenyl)phosphite, diphenylisodecyl phosphite, and tetraphenyl dipropylene glycol diphosphite; sulfur ester-based antioxidants such as dilauryl thiodipropionate; amine-based antioxidants such as phenyl-$\alpha$-naphthylamine, phenyl-$\beta$-naphthylamine, p-(p-toluenesulfonylamide)-diphenylamine, 4,4'-($\alpha,\alpha$-dimethylbenzyl)diphenylamine, N,N-diphenyl-p-phenylenediamine, N-isopropyl-N'-phenyl-p-phenylenediamine, and butyl aldehyde-aniline condensation products; quinoline antioxidants such as 6-ethoxy-2,2,4-trimethyl-1,2-dihydroquinoline; hydroquinone antioxidants such as 2,5-di-(t-amyl)hydroquinone; and the like. These antioxidants can be used alone or in combination.

The content of the antioxidant is preferably 0.05 to 10 parts by weight, more preferably 0.1 to 5 parts by weight, still more preferably 1 to 3 parts by weight relative to 100 parts by weight of the ion-polymerized conjugated diene polymer (A) contained in the latex composition.

Examples of the method for preparing the latex composition according to the present invention include, but are not particularly limited to, a method of mixing an ion-polymerized conjugated diene polymer (A) latex, an emulsion-polymerized conjugated diene polymer (B) latex, and optionally a sulfur-based vulcanizing agent and a vulcanization accelerator, and the like using a dispersing machine such as a ball mill, a kneader, or a disper. In this method, the compounding agents such as a sulfur-based vulcanizing agent and a vulcanization accelerator can be prepared as an aqueous dispersion using above-described dispersing machine in advance, and then added to the ion-polymerized conjugated diene polymer (A) latex and the emulsion-polymerized conjugated diene polymer (B) latex.

The solids content of the latex composition of the invention is not particularly limited, but is preferably in the range of 15 to 50 wt%, more preferably in the range of 35 to 45 wt% to properly control the film thickness during dip molding.

In the present invention, to obtain a molded article, such as a dip-molded article, having sufficient mechanical properties, the latex composition is preferably subjected to maturation (pre-crosslinking or pre-vulcanization) before being molded, e.g., dip molded. The time for maturation (pre-vulcanization) is not particularly limited, and is preferably 8 to 120 hours, more preferably 24 to 72 hours. The temperature during maturation (pre-vulcanization) is not particularly limited, and is preferably 20 to 40°C. The latex composition according to the present invention has excellent stability, and can sufficiently suppress the formation of aggregates, for example, even when the latex composition according to the present invention is subjected to maturation for 48 hours.

<Dip-molded article>

The dip-molded article according to the present invention is a film-type dip-molded article produced by dip molding of the above-described latex composition according to the present invention. Dip molding is a method of immersing a mold into the latex composition to deposit the composition on the surface of the mold, then pulling the mold out of the composition, and thereafter drying the composition deposited on the surface of the mold. The mold before the immersion into the latex composition may be preheated. Further, a coagulant can be used as needed before the immersion of the mold into the latex composition or after the pullout of the mold from the latex composition.

Specific examples of how to use a coagulant include a method (anode coagulant dipping) of immersing the mold into a coagulant solution before immersion into the latex composition to deposit the coagulant onto the mold, a method (Teague coagulant dipping) of immersing the mold on which the latex composition is deposited in a coagulant solution, and the like. Preferred is anode coagulant dipping because a dip-molded article having less thickness unevenness is obtained.

Specific examples of coagulants include water-soluble polyvalent metal salts such as metal halides such as barium chloride, calcium chloride, magnesium chloride, zinc chloride, and aluminum chloride; nitrates such as barium nitrate, calcium nitrate, and zinc nitrate; acetates such as barium acetate, calcium acetate, and zinc acetate; and sulfates such as calcium sulfate, magnesium sulfate, and aluminum sulfate. Among these, preferred are calcium salts, and more preferred is calcium nitrate. These water-soluble polyvalent metal salts can be used alone or in combination.

Such coagulants can be generally used as solutions in water, an alcohol, or a mixture thereof, and are preferably used as aqueous solutions. Such aqueous solutions may further contain a water-soluble organic solvent such as methanol or ethanol and a nonionic surfactant. Although the concentration of the coagulant varies depending on the type of the water-soluble polyvalent metal salt, it is preferably 5 to 50 wt%, more preferably 10 to 30 wt%.

After the mold is pulled out of the latex composition, usually, the mold is heated to dry the deposit formed on the mold. The conditions for drying are appropriately selected.

In the next step, the dip-molded layer formed on the mold is cross-linked by heating. The dip-molded layer can be cross-linked by performing a heat treatment at a temperature of usually 80 to 150°C for preferably 10 to 130 minutes. As a heating method, external heating methods using infrared rays or heated air or internal heating methods using high-frequency waves can be used. Among these, preferred is external heating using heated air. Before performing the heating treatment, the dip-molded layer can be immersed in water, preferably in hot water of 30 to 70°C for about 1 to 60 minutes to remove water-soluble impurities (e.g., excessive emulsifiers, coagulants, and the like). The process for removing water-soluble impurities can be performed after the dip-molded layer is subjected to the heat treatment, but is preferably performed before the heating treatment because water-soluble impurities can be further efficiently removed.

Next, the dip-molded layer is detached from the mold for dip molding to obtain a dip-molded article. As a detaching method, a method of peeling the layer by hand or by water pressure or pressure of compressed air can be used. After the detaching, a heat treatment at a temperature of 60 to 120°C for 10 to 120 minutes may be further performed.

The dip-molded article has a film thickness of preferably 0.03 to 0.50 mm, more preferably 0.05 to 0.40 mm, particularly preferably 0.08 to 0.30 mm.

The dip-molded article according to the present invention is obtained using the above-described latex composition according to the present invention, and thus has a low tensile elastic modulus and excellent flexibility, and therefore can be particularly suitably used, for example, as gloves and the like. When the dip-molded articles are gloves, in order to prevent the dip-molded articles from sticking to each other at the contact surface and to impart slip for easily putting on and taking off the gloves, inorganic fine particles made of talc, calcium carbonate, and the like or organic fine particles made of starch particles and the like may be applied to the surfaces of the gloves, or an elastomer layer containing the fine particles may be formed on the surface of the gloves, or the surface layers of the gloves may be chlorinated

Further, other than the aforementioned glove, the dip-molded article according to the present invention can also be used in medical supplies such as baby bottle nipples, droppers, tubes, water pillows, balloon stalls, catheters, and condoms; toys such as balloons, dolls, and balls; industrial supplies such as pressure molding bags and gas storage bags; fingerstalls; and the like.

EXAMPLES

Hereinafter, the present invention will be described in more detail by way of Examples, but these Examples should not be construed as limitations to the present invention. The term "part(s)" is on a weight basis unless otherwise specified. The physical properties were measured as follows.

<Solids content>

For each sample, 2 g (weight: X2) was accurately weighed on an aluminum dish (weight: X1), followed by drying in a hot air dryer at 105°C for 2 hours. Subsequently, after cooling in a desiccator, the weight (weight: X3) of the sample and the aluminum dish was measured to calculate the solids content according to the following calculation expression:

$$\text{Solids content (wt\%)} = (X3 - X1) \times 100/X2$$

<Weight average molecular weight (Mw) and molecular weight distribution (Mw/Mn)>

Weight average molecular weight (Mw) and molecular weight distribution (Mw/Mn) were measured by gel permeation chromatography calibrated with polystyrene standards.

<Bonding geometries of isoprene and butadiene>

$^1$H-NMR analysis was performed on each of the polymers ((A-1), (A-3), (B-1), and (B-2)) obtained in Production Examples 1, 3, 4, and 5, and the contents of cis bond units (1,4-cis structure), trans bond units (1,4-trans structure), and vinyl bond units (1,2-vinyl structure and 3,4-vinyl structure)) of isoprene in each of the polymers relative to the total monomer units were determined. In addition, $^1$H-NMR analysis was performed on the emulsion-polymerized acrylonitrile/butadiene/methacrylic acid copolymer (B-3) obtained in Production Example 6, and the contents of cis bond units (1,4-cis structure), trans bond units (1,4-trans structure), and vinyl bond units (1,2-vinyl structure) of butadiene in the emulsion-polymerized acrylonitrile/butadiene/methacrylic acid copolymer (B-3) relative to the total amount of the total acrylonitrile units and the total butadiene units were determined.

<Volume average particle size>

The volume average particle size of the polymer particles constituting a latex was measured using a laser diffraction particle size distribution analyzer (trade name "SALD-2200", available from SHIMADZU CORPORATION).

<Amount of aggregation product>

The latex composition was subjected to maturation under conditions at 25°C for 48 hours, and then the maturated latex composition (solids content: D wt%, weight: E) was sieved through a 200-mesh stainless metal mesh with a known weight (weight: C). When the metal mesh was dried, the weight of the metal mesh (F) was measured. Next, the amount of aggregation product (wt%) in the latex composition was calculated according to the following formula. When the amount of an aggregation product is smaller, the stability can be determined to be superior.

$$\text{Amount of aggregation product} = [(F-C)/(D \times E)] \times 100 \text{ (wt\%)}$$

<Tensile strength and elongation>

The tensile strength and the elongation of the dip-molded article was measured according to ASTM D412. The dip-molded article was punched out using a dumbbell (trade name "SUPER DUMBBELL (type: SDMK-100C)" to obtain a test piece. The test piece was stretched at a stretching speed of 500 mm/min using a Tensilon universal tester (trade name "RTG-1210", available from ORIENTEC Co., LTD), and tensile strength (unit: MPa) immediately before break and elongation (unit: %) immediately before break were measured. Higher tensile strength is more preferred, and larger elongation is more preferred.

<Tensile elastic modulus>

The tensile elastic modulus of the dip-molded article was measured according to JIS K 6251:2010. Lower tensile elastic modulus of the dip-molded article causes superior flexibility, and is more preferred.

<Production Example 1>

(Production of ion-polymerized polyisoprene (A-1) latex)

1150 Parts of n-hexane dried over molecular sieves (water content: 3 ppm by weight) and 100 parts of isoprene were fed into a dried and nitrogen-purged autoclave equipped with a stirrer. Next, the temperature in the autoclave was controlled at 30°C, and 1.0 part of titanium tetrachloride, 1.0 part of triethylaluminium, 0.1 parts of n-butyl ether were added with stirring, then the mixture was allowed to react for 2 hours. Thereafter, 2.0 parts of methanol was added to the reaction mixture as a polymerization terminator to stop the reaction. Thus, an n-hexane solution of ion-polymerized polyisoprene (a) was obtained.

On the other hand, potassium rosinate was added to water, and dissolved by raising the temperature to 60°C to prepare an emulsifier aqueous solution (b) (concentration: 1.5 wt%).

Next, the n-hexane solution of ion-polymerized polyisoprene (a) and the emulsifier aqueous solution (b) obtained above were mixed using a mixer (product name "Multi Line mixer MS26-MMR-5.5L", available from SATAKE CHEMICAL EQUIPMENT MFG., LTD.), such that the content of potassium rosinate in the emulsifier aqueous solution (b) was 10 parts relative to 100 parts of the ion-polymerized polyisoprene in the n-hexane solution of ion-polymerized polyisoprene (a), and then mixed and emulsified using an emulsifying apparatus (product name "CAVITRON CD1020", available from Pacific Machinery & Engineering Co., Ltd.) at a rotational speed of 6000 rpm to obtain an emulsified dispersion (c). In this process, the total feed rate of the n-hexane solution of ion-polymerized polyisoprene (a) and the emulsifier aqueous solution (b) was maintained at 2,000 kg/hr, the temperature was maintained at 60°C, and the back pressure (gauge pressure) was maintained at 0.5 MPa.

Subsequently, the emulsified dispersion (c) was heated to 80°C under a reduced pressure of -0.01 to -0.09 MPa (gauge pressure) to distill off n-hexane and afford an aqueous dispersion (d) of the ion-polymerized polyisoprene. In this process, a defoamer (trade name "SM5515", available from Dow Corning Toray Co., Ltd.) was continuously added by spraying the defoamer in an amount of 300 ppm by weight relative to the ion-polymerized polyisoprene in the emulsified dispersion (c). In the process of distilling off n-hexane, the emulsified dispersion (c) was adjusted to 70 vol% or less of the tank volume, and was gradually stirred at 60 rpm using a three-bladed inclined paddle as a stirring blade.

After the completion of distilling off of n-hexane, the thus obtained aqueous dispersion (d) of the ion-polymerized polyisoprene was concentrated using a continuous centrifuge (product name "SRG610", available from Alfa Laval AB) at 8,000 to 9,000 G to give an ion-polymerized polyisoprene (A-1) latex with a solids content of 60 wt% as a light liquid. The conditions for centrifugation were as follows: the solids content of the aqueous dispersion (d) before centrifugation was 8 wt%, the flow rate before continuous centrifugation was 1,300 kg/hr, and the back pressure (gauge pressure) of the centrifuge was 0.1 MPa. The weight average molecular weight of the ion-polymerized polyisoprene (A-1) was 1,300,000, the contents of cis bond units was 98 wt%, the sum of the contents of trans bond units and vinyl bond units was 2 wt% relative to the total isoprene units in the ion-polymerized polyisoprene (A-1). The volume average particle size of the polymer particles constituting the ion-polymerized polyisoprene (A-1) latex was 1 μm.

<Production Example 2>

(Production of methacrylic acid-grafted ion-polymerized polyisoprene polymer (A-2) latex)

The ion-polymerized polyisoprene (A-1) latex was diluted by adding 130 parts of distilled water relative to 100 parts of the ion-polymerized polyisoprene (A-1) in the ion-polymerized polyisoprene (A-1) latex obtained in the above-described Production Example 1. Thereafter, a solution of 0.8 parts (relative to 100 parts of the ion-polymerized polyisoprene (A-1)) of a sodium salt of a condensation product of β-naphthalene sulfonic acid and formalin (trade name "DEMOL T-45", available from Kao Corporation) as a dispersant diluted with 4 parts of distilled water relative to 100 parts of the ion-polymerized polyisoprene (A-1) was added to the ion-polymerized polyisoprene (A-1) latex over 5 minutes. Subsequently, the ion-polymerized polyisoprene (A-1) latex containing the dispersant was fed into a nitrogen-purged reactor with a stirrer, and was warmed to 30°C with stirring. In another reactor, a diluted solution of methacrylic acid was prepared by mixing 5 parts of methacrylic acid as a carboxyl group-containing compound and 16 parts of distilled water. The diluted solution of methacrylic acid was added over 30 minutes to the reactor controlled at 20°C.

Further, a solution (e) composed of 7 parts of distilled water, 0.32 parts of sodium formaldehyde sulfoxylate (trade name "SFS", available from MITSUBISHI GAS CHEMICAL COMPANY, INC.), and 0.01 parts of ferrous sulfate (trade name "Frost Fe", available from CHELEST CORPORATION) was prepared in another reactor. After the solution (e) was transferred to the former reactor, 0.5 parts of 1,1,3,3-tetramethylbutyl hydroperoxide (trade name "PEROCTA H", available from NOF Corporation) was added thereto to allow contents to react at 20°C for 1 hour, followed by concentration in a centrifuge to yield a methacrylic acid-grafted ion-polymerized polyisoprene polymer (A-2) latex having a solids content of 57.0 wt%. The degree of modification (graft ratio) of the methacrylic acid-grafted ion-polymerized polyisoprene polymer (A-2) was 1.8 wt%. The volume average particle size of the polymer particles constituting the methacrylic acid-grafted ion-polymerized polyisoprene polymer (A-2) latex was 1 μm.

<Production Example 3>

(Production of ion-polymerized SIS (A-3) latex)

1150 Parts of n-hexane, 15 parts of styrene, and 0.0017 parts of N,N,N',N'-tetramethylethane-1,2-diamine were fed into a dried and nitrogen-purged autoclave equipped with a stirrer. The temperature in the autoclave was controlled to 60°C, and 0.2036 parts of a hexane solution containing 15 wt% of n-butyllithium as a catalyst solution was added with stirring, and the mixture was allowed to react for 20 minutes. Next, 85 parts of isoprene was continuously added into the autoclave for 1 hour. After the continuous addition, the mixture was allowed to react for 15 minutes. Thereafter, 0.0308 parts of dichlorodimethylsilane was added and reacted for 30 minutes. The polymerization reaction rate was 99%. To the resulting reaction solution was added 0.0153 parts of methanol to stop the reaction. Thus, an n-hexane solution of an ion-polymerized styrene-isoprene-styrene block copolymer (hereinafter, sometimes referred to as "ion-polymerized SIS") was obtained. Further, 0.07 parts of 2,6-di-tert-butyl-p-cresol (available from Chuo Kaseihin Co., Inc.) and 0.01 parts of 2,6-di-tert-butyl-4-(4,6-bis(octylthio)-1,3,5-triazin-2-ylamino)phenol (made by Ciba Specialty Chemicals, trade name "IRGANOX 565") as antioxidants relative to 100 parts of the ion-polymerized SIS contained in the n-hexane solution were added to the resulting n-hexane solution of the ion-polymerized SIS, and dissolved at room temperature with stirring to obtain a solution of the ion-polymerized SIS containing the antioxidants.

Next, an ion-polymerized SIS (A-3) latex was produced as in Production Example 1 except that a solution of the ion-polymerized SIS was used instead of the n-hexane solution of ion-polymerized polyisoprene (a). The weight average molecular weight (Mw) of the ion-polymerized SIS (A-3) was 250,000. The amounts of the monomer units were almost the same as those used as raw materials, that is, the content of cis bond units was 90 wt%, the content of trans bond units was 8.5 wt%, and the content of vinyl bond units was 1.5 wt% relative to the total isoprene units in the ion-polymerized SIS (A-3). The volume average particle size of the polymer particles constituting the ion-polymerized SIS (A-3) latex was 1 μm.

<Production Example 4>

(Production of emulsion-polymerized isoprene/methacrylic acid copolymer (B-1) latex)

3 Parts of sodium dodecylbenzenesulfonate and 180 parts of water were fed into a reactor with an inner volume of 1 liter, and then 1.3 parts of methacrylic acid and 0.60 parts of t-dodecyl mercaptan were added. The gas in the reactor was replaced with nitrogen three times, the temperature of the reactor was maintained at 5°C, 98.7 parts of isoprene, 0.005 parts of an activating agent (Fe-Na EDTA complex), 0.064 parts of sodium formaldehyde sulfoxylate (trade name "SFS", available from MITSUBISHI GAS CHEMICAL COMPANY, INC.), and 0.09 parts of 1,1,3,3-tetramethylbutyl hydroperoxide (trade name "PEROCTA H", available from NOF Corporation) were fed into the reactor to cause polymerization reaction. The polymerization reaction was allowed to proceed for 20 hours, and a potassium hydroxide aqueous solution was added to obtain an emulsion-polymerized isoprene/methacrylic acid copolymer (B-1) latex (solids content: 3 wt%). The weight average molecular weight (Mw) of the emulsion-polymerized isoprene/methacrylic acid copolymer (B-1) was 260,000. The amounts of the monomer units were 98.7 wt% for isoprene and 1.3 wt% for methacrylic acid. The content of cis bond units was 24 wt%, the content of trans bond units was 72 wt%, and the content of vinyl bond units was 4 wt% relative to the total isoprene units in the emulsion-polymerized isoprene/methacrylic acid copolymer (B-1).

<Production Example 5>

(Production of emulsion-polymerized isoprene/methacrylic acid copolymer (B-2) latex)

An emulsion-polymerized isoprene/methacrylic acid copolymer (B-2) latex (solids content: 3 wt%) was obtained as in Production Example 4 except that 2.5 parts of methacrylic acid and 97.5 parts of isoprene were used instead. The weight average molecular weight (Mw) of the emulsion-polymerized isoprene/methacrylic acid copolymer (B-2) was 240,000. The amounts of the monomer units were 97.5 wt% for isoprene and 2.5 wt% for methacrylic acid. The contents of cis bond units was 23 wt%, the contents of trans bond units was 72 wt%, and the contents of vinyl bond units was 5 wt% in isoprene relative to the total monomer units.

<Production Example 6>

(Production emulsion-polymerized acrylonitrile/butadiene/methacrylic acid copolymer (B-3) latex)

17.5 Parts of acrylonitrile, 32.6 parts of 1,3-butadiene, and 0.9 parts of methacrylic acid (total: 50 parts) as initial polymerization monomers, 0.5 parts of t-dodecyl mercaptan (tDM) as a molecular weight modifier, 95 parts of deionized water, 1.0 part of sodium dodecylbenzenesulfonate (DBS) as an emulsifier, 0.2 parts of potassium persulfate as a polymerization initiator, and 0.1 parts of sodium ethylenediaminetetraacetate (EDTA) as a reductant were fed into an nitrogen-purged pressure-resistant reactor. The temperature in the polymerization system was raised to 35°C to initiate the polymerization reaction. When the polymerization conversion ratio reached 50%, 1.0 part of sodium dodecylbenzenesulfonate (as 10% aqueous solution) as an additional emulsifier was added at one time. When the additional emulsifier (10% aqueous solution of sodium dodecylbenzenesulfonate) was added, 17.5 parts of acrylonitrile, 32.6 parts of 1,3-butadiene, and 0.9 parts of methacrylic acid (total: 50 parts) (residual monomers), as well as an emulsion, in which 0.4 parts of t-dodecyl mercaptan was emulsified with 15.0 parts of deionized water and 0.5 parts of sodium dodecylbenzenesulfonate, were continuously added to the polymerization system over 270 minutes. The polymerization conversion ratio after the continuous addition was 60%. Thereafter, the polymerization was allowed to continue until the polymerization conversion ratios of all monomers reached 97%, and then 0.1 parts of diethylhydroxylamine was added to stop the polymerization reaction. Accordingly, an emulsion-polymerized acrylonitrile/butadiene/methacrylic acid copolymer (B-3) latex was obtained. The weight average molecular weight (Mw) of the emulsion-polymerized acrylonitrile/butadiene/methacrylic acid copolymer (B-3) was 280,000. The amounts of monomer units were 32.4 wt% for acrylonitrile, 65.8 wt% for butadiene, and 1.8 wt% for methacrylic acid. The content of cis bond units was 12 wt%, the contents of trans bond units was 46 wt%, and the contents of vinyl bond units was 9 wt% in butadiene relative to the total amount of the total acrylonitrile units and the total butadiene units as 100 wt%.

<Example 1>

(Production of latex composition)

The methacrylic acid-grafted ion-polymerized polyisoprene polymer (A-2) latex obtained in Production Example 2 and the emulsion-polymerized isoprene/methacrylic acid copolymer (B-1) latex obtained in Production Example 4 were mixed such that the amount of the emulsion-polymerized isoprene/methacrylic acid copolymer (B-1) was 0.8 parts relative to 100 parts of the methacrylic acid-grafted polymer (A-2) to give a latex mixture.
Further, 100% of the carboxyl groups in a styrene-mono-sec-butyl maleate-monomethyl maleate polymer (trade name "Scripset 550", available from Hercules Inc.) were neutralized by sodium hydroxide to give a sodium salt aqueous solution (concentration: 10 wt%) of the polymer as a dispersant. Thereafter, this dispersant was added to the above-described latex mixture such that the amount of the dispersant was 0.8 parts relative to 100 parts of the polymer components in the latex mixture to give a mixture.
Thereafter, with stirring, 1.5 parts of zinc oxide, 1.5 parts of sulfur, 2 parts of an antioxidant (trade name "Wingstay L", available from Chukyo Yushi Co., Ltd.), and 2.5 parts of zinc diisopropyl xanthate (cross-linking accelerator) relative to 100 parts of the polymer components in the mixture based on solids content were added to the resulting mixture, and a proper amount of a potassium hydroxide aqueous solution was added as a pH adjuster to give a latex composition (pH = 10.1). The amount of an aggregation product of the resulting latex composition was measured according to the above-described method. The results are shown in Table 1.

(Production of dip-molded article)

The resulting latex composition was placed in thermostat bath at 25°C and subjected to maturation for 48 hours. A commercially available ceramic hand mold (available from SHINKO CERAMICS CO., LTD) was washed, followed by preheating in an oven at 70°C. Thereafter, the hand mold was immersed in a coagulant aqueous solution containing 18 wt% of calcium nitrate and 0.05 wt% of polyoxyethylene lauryl ether (trade name "EMALGEN 109P", available from Kao Corporation) for 5 seconds, and then was taken out of the coagulant aqueous solution. Subsequently, the hand mold was dried in an oven at 70°C for 30 minutes or more, thereby allowing the coagulant to deposit on the hand mold, so that the hand mold was coated with the coagulant.
Thereafter, the hand mold coated with the coagulant was taken out of the oven, and was immersed for 10 seconds in the matured latex composition prepared above. Subsequently, the hand mold was air-dried at room temperature for 10 minutes, and was immersed in hot water at 60°C for 5 minutes to elute water-soluble impurities, thereby forming a dip-molded layer on the hand mold. Thereafter, the dip-molded layer formed on the hand mold was vulcanized by heating in an oven at 120°C for 30 minutes, followed by cooling to room temperature, and was separated from the hand mold after talc was spread. Thus, a glove-shaped dip-molded article was obtained. The tensile strength, elongation, and tensile elastic modulus of the resulting dip-molded article were measured according to the above-described methods. The results are shown in Table 1.

<Examples 2 to 6, Comparative Examples 1 to 3>

Latex compositions were prepared as in Example 1 except that each of the latices obtained in Production Examples 1 to 6 was used in an amount shown in Table 1 (the amount of polymer (as solids) contained in each latex), and 0.3 parts of zinc diethyldithiocarbamate, 0.5 parts of zinc dibutyldithiocarbamate, and 0.7 parts of 2-mercaptobenzothiazole zinc salt (cross-linking accelerator 2) were used instead of 2.5 parts of zinc diisopropyl xanthate (cross-linking accelerator 1) in Examples 5 to 6 and Comparative Examples 2 to 3 to prepare latex compositions. On the other hand, in Comparative Example 1, an ammonium salt aqueous solution of a styrene-mono-n-butyl maleate polymer (C-1) (trade name "ARASTAR 703S", available from ARAKAWA CHEMICAL INDUSTRIES, LTD., the styrene-maleate copolymer as a raw material was produced by a radical reaction in solution) was used. The resulting latex composition was subjected to maturation and dip molded, and evaluated as in Example 1. The results are shown in Table 1. In Comparative Example 3, since the dip-molded layer cracked, no dip-molded article could be obtained.

[Table 1]

Table 1

| | Latex composition | | | | | Results of evaluations | | | |
| | Polymers | | | | Vulcanization accelerator | Amount of aggregation product | Tensile strength | Tensile elongation | Tensile elastic modulus |
| | Type | (Parts) | Type | (Parts) | Type | (wt%) | (MPa) | (%) | (MPa) |
|---|---|---|---|---|---|---|---|---|---|
| Example 1 | Methacrylic acid-grafted ion-polymerized polyisoprene polymer (A-2) | 100 | Emulsion-polymerized isoprene/methacrylic acid copolymer (B-1) | 0.8 | Vulcanization accelerator 1 | <0.1 | 28.2 | 987 | 1.3 |
| Example 2 | Methacrylic acid-grafted ion-polymerized polyisoprene polymer (A-2) | 100 | Emulsion-polymerized isoprene/methacrylic acid copolymer (B-1) | 2.5 | Vulcanization accelerator 1 | <0.1 | 26.8 | 991 | 1.4 |
| Example 3 | Methacrylic acid-grafted ion-polymerized polyisoprene polymer (A-2) | 100 | Emulsion-polymerized isoprene/methacrylic acid copolymer (B-2) | 0.8 | Vulcanization accelerator 1 | <0.1 | 27.5 | 955 | 1.6 |
| Example 4 | Methacrylic acid-grafted ion-polymerized polyisoprene polymer (A-2) | 100 | Emulsion-polymerized acrylonitrile/butadiene/methacrylic acid copolymer (B-3) | 0.8 | Vulcanization accelerator 1 | <0.1 | 24.4 | 924 | 1.9 |
| Example 5 | Ion-polymerized polyisoprene (A-1) | 100 | Emulsion-polymerized isoprene/methacrylic acid copolymer (B-1) | 0.8 | Vulcanization accelerator 2 | <0.1 | 22.8 | 1110 | 1.1 |
| Example 6 | Ion-polymerized SIS (A-3) | 100 | Emulsion-polymerized isoprene/methacrylic acid copolymer (B-1) | 0.8 | Vulcanization accelerator 2 | <0.1 | 20.2 | 1231 | 1.1 |
| Comparative Example 1 | Methacrylic acid-grafted ion-polymerized polyisoprene polymer (A-2) | 100 | Styrene/mono-n-butyl maleate polymer (C-1) | 0.8 | Vulcanization accelerator 1 | <0.1 | 27.9 | 988 | 2.4 |

(continued)

| | Latex composition | | | | | Results of evaluations | | | |
| --- | --- | --- | --- | --- | --- | --- | --- | --- | --- |
| | Polymers | | | | Vulcanization accelerator | Amount of aggregation product | Tensile strength | Tensile elongation | Tensile elastic modulus |
| | Type | (Parts) | Type | (Parts) | Type | (wt%) | (MPa) | (%) | (MPa) |
| Comparative Example 2 | Ion-polymerized polyisoprene (A-1) | 100 | Methacrylic acid-grafted ion-polymerized polyisoprene polymer (A-2) | 0.8 | Vulcanization accelerator 2 | 1.1 | 21.2 | 1120 | 1.8 |
| Comparative Example 3 | - | 0 | Emulsion-polymerized isoprene/methacrylic acid copolymer (B-1) | 100 | Vulcanization accelerator 2 | <0.1 | - | - | - |
| Vulcanization accelerator 1: 2.5 parts of zinc diisopropyl xanthate Vulcanization accelerator 2: 0.3 parts of zinc diethyldithiocarbamate, 0.5 parts of zinc dibutyldithiocarbamate, and 0.7 parts of 2-mercaptobenzothiazole zinc salt | | | | | | | | | |

As shown in Table 1, the latex composition comprising the ion-polymerized conjugated diene polymer (A) latex and the emulsion-polymerized conjugated diene polymer (B) latex had excellent stability, and could afford dip-molded articles having low tensile elastic modulus and excellent flexibility (Examples 1 to 6).

On the other hand, when the emulsion-polymerized conjugated diene polymer (B) latex was not contained, a dip-molded article having high tensile elastic modulus and inferior flexibility (Comparative Example 1) was obtained, or the latex composition had inferior stability (Comparative Example 2). In addition, when the ion-polymerized conjugated diene polymer (A) latex was not contained, no dip-molded article could be obtained (Comparative Example 3).

**Claims**

1. A latex composition comprising an ion-polymerized conjugated diene polymer (A) latex, and an emulsion-polymerized conjugated diene polymer (B) latex.

2. The latex composition according to claim 1, wherein the content of the emulsion-polymerized conjugated diene polymer (B) is 0.1 to 3 parts by weight relative to 100 parts by weight of the ion-polymerized conjugated diene polymer (A).

3. The latex composition according to claim 1 or 2, wherein the emulsion-polymerized conjugated diene polymer (B) comprises 95.0 to 99.9 wt% of conjugated diene monomer units and 0.1 to 5.0 wt% of ethylenically unsaturated carboxylic acid monomer units.

4. The latex composition according to any one of claims 1 to 3, wherein the ion-polymerized conjugated diene polymer (A) is polyisoprene or a styrene-isoprene-styrene block copolymer.

5. The latex composition according to any one of claims 1 to 4, wherein the ion-polymerized conjugated diene polymer (A) is a carboxylic acid-modified product obtained by proceeding a carboxylic acid-modification in an aqueous phase.

6. The latex composition according to any one of claims 1 to 5, wherein the content of cis bond units in the conjugated diene monomer units contained in the ion-polymerized conjugated diene polymer (A) is more than 70 wt% relative to the total conjugated diene monomer units.

7. The latex composition according to any one of claims 1 to 6, wherein the content of cis bond units in the conjugated diene monomer units contained in the emulsion-polymerized conjugated diene polymer (B) is 10 to 70 wt% relative to the total conjugated diene monomer units.

8. The latex composition according to any one of claims 1 to 7, further comprising a sulfur-based vulcanizing agent.

9. The latex composition according to any one of claims 1 to 8, further comprising a vulcanization accelerator.

10. The latex composition according to any one of claims 1 to 9, wherein the vulcanization accelerator is a xanthogen compound.

11. A dip-molded article prepared by dip molding of the latex composition according to any one of claims 1 to 10.

## INTERNATIONAL SEARCH REPORT

| International application No. |
| --- |
| **PCT/JP2022/029529** |

**A.    CLASSIFICATION OF SUBJECT MATTER**

*C08L 9/00*(2006.01)i; *C08K 3/06*(2006.01)i; *C08K 5/38*(2006.01)i; *C08L 51/04*(2006.01)i; *C08L 53/02*(2006.01)i
FI:    C08L9/00; C08L53/02; C08L51/04; C08K5/38; C08K3/06

According to International Patent Classification (IPC) or to both national classification and IPC

**B.    FIELDS SEARCHED**

Minimum documentation searched (classification system followed by classification symbols)

C08L9/00; C08K3/06; C08K5/38; C08L51/04; C08L53/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2005-154473 A (YOKOHAMA RUBBER CO LTD) 16 June 2005 (2005-06-16) | 1-11 |
| A | JP 2005-146053 A (YOKOHAMA RUBBER CO LTD) 09 June 2005 (2005-06-09) | 1-11 |
| A | JP 2017-69062 A (NIPPON ZEON CO) 06 April 2017 (2017-04-06) | 1-11 |
| A | WO 2018/100969 A1 (NIPPON ZEON CO) 07 June 2018 (2018-06-07) | 1-11 |
| A | WO 2018/043699 A1 (KURARAY CO., LTD.) 08 March 2018 (2018-03-08) | 1-11 |
| A | JP 54-129035 A (KURARAY CO., LTD.) 06 October 1979 (1979-10-06) | 1-11 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **31 August 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/029529**

| Patent document cited in search report | | | Publication date (day/month/year) | Patent family member(s) | | | Publication date (day/month/year) |
|---|---|---|---|---|---|---|---|
| JP | 2005-154473 | A | 16 June 2005 | (Family: none) | | | |
| JP | 2005-146053 | A | 09 June 2005 | (Family: none) | | | |
| JP | 2017-69062 | A | 06 April 2017 | US | 2018/0261845 | A1 | |
| | | | | WO | 2017/056489 | A1 | |
| | | | | EP | 3358661 | A1 | |
| | | | | CN | 108140838 | A | |
| | | | | KR | 10-2018-0063078 | A | |
| WO | 2018/100969 | A1 | 07 June 2018 | US | 2020/0010651 | A1 | |
| | | | | EP | 3549973 | A1 | |
| | | | | CN | 109890875 | A | |
| WO | 2018/043699 | A1 | 08 March 2018 | US | 2019/0194429 | A1 | |
| | | | | EP | 3508526 | A1 | |
| | | | | CA | 3035648 | A1 | |
| | | | | CN | 109642055 | A | |
| | | | | KR | 10-2019-0046829 | A | |
| | | | | TW | 201811836 | A | |
| JP | 54-129035 | A | 06 October 1979 | (Family: none) | | | |

Form PCT/ISA/210 (patent family annex) (January 2015)

**REFERENCES CITED IN THE DESCRIPTION**

**Patent documents cited in the description**

- WO 2014129547 A